# EUROPEAN PATENT APPLICATION

(11) **EP 2 889 761 A1**
(43) Date of publication of application: **01.07.2015**
(21) Application number: 13199900.5
(22) Date of filing: 31.12.2013
(51) Int. Cl.: G06F 9/44, G06N 5/04, H04L 29/08

(54) **A process integration method and system**

(71) Applicant: THALES NEDERLAND B.V., 7550 GD Hengelo (NL)
(72) Inventor: Pavlin, Gregor, 2628XH DELFT (NL); De Oude, Patrick, 2628XH DELFT (NL); Penders, Ate, 2628XH DELFT (NL)
(74) Representative: Hnich-Gasri, Naïma

(57) **Abstract**

Embodiments of the invention provide methods, systems and computer program products for integrating a given algorithm (1) into a target information processing system (111). The algorithm is coded in a programming language and compiled into algorithm software libraries. The target information processing system comprises a set of target system algorithms, each being associated with a process proxy, with algorithm variables and with variable data-object types. The process integration method comprises :
a. generating a Variable Linker File (9) for capturing the associations between the variables of the given algorithm and the data-object of the target information processing system (111),
b. linking the software libraries (1,16) associated with the given algorithm with predefined process proxy libraries (13), which provides linked libraries,
c. creating a process proxy (4) on a server based on the linked libraries (15) and the variable linker file; and
d. linking the Variable Linker File (9) with the process proxy (4), the process proxy (4) being configured to exchange data in the runtime environment of the target system environment using the Variable Linker File to translate between the data-objects in the target information processing system (111) and the variables of the given algorithm.

## Description

### Field of the invention

The invention generally relates to the field of data processing and more particularly to a method and a system for dynamically integrating a process in a system.

### Background

Contemporary applications increasingly require combinations of different types of data sources and automated processes based on different types of algorithms. Examples of such applications include internet applications such as Smart cities, Smart homes, Large scale crisis management, advanced solutions to surveillance in defense and civilian domains and security applications. These kinds of domains are characterized through large quantities of very heterogeneous data stemming from different and generally spatially dispersed devices. Such rich body of data can be exploited by using algorithms resulting in improved assessment and prediction of the states of the world process control. In this way, better informed decisions can be made that are likely to lead to a better use of resources involving for example a reduced energy consumption, a better protection of citizens and countries, etc.. Further, such decisions can mitigate negative effects more efficiently (e.g. less pollution, less damage, etc.).

Such contemporary applications generally involve the use of specific data sources depending on the role of the applications (devices, databases, etc.), as well as the use of processes or algorithms which uses the devices' outputs to perform a particular processing in view of the applications' role. For example, a "smart home" application, which aim is to reduce energy, can involve the use of devices such as motion detectors and individual air conditioning units/subsystems in different rooms (living room, bedroom, kitchen), whereas automated processes implemented for such application may include arbitrary algorithms for controlling the intensity of the air conditioning operation in each room, where the algorithm inputs are data from the motion sensors and preferences by the users. The algorithms can be of different types, ranging from algebraic functions to Artificial Intelligence (AI), such as rule based functions, Neural networks, probabilistic networks, etc., depending on the nature of the application.

There is accordingly a need for adequate computing solutions which support analysis of the data and provide automated processes (e.g. controllers) with reliable assessments of the situation. However, the targeted applications involve large numbers of very heterogeneous data sources (such as sensors, databases, etc.) and analysis services. Further, in such settings, new analysis capabilities must be added frequently whereas it is generally complex to introduce new data sources and new algorithms into an existing working environment because of the following access and interoperability issues:
- The analysis capability (algorithm) needs to be connected to the sources providing the relevant data;
- The provided data must be in the suitable format and must have the suitable semantics to be usable by the analysis capability (algorithm).

There exist conventional approaches to interoperability based on Service-Oriented Architecture (SOA) technology, such as the solution disclosed in Lucas Zamboulis, Alexandra Poulovassilis, George Roussos: Flexible data integration and ontology-based data access to medical records. BIBE 2008: 1-6, or the solution disclosed in Eduard Hovy: Using an ontology to simplify data access, Communications of the ACM, Volume 46, Issue 1, January 2013. In such approaches, the creation of heterogeneous service descriptions and the discovery of the relevant data types depend on elaborate domain ontologies describing relations between different concepts. Ontologies are typically developed and maintained in a central way. However, this requires a substantial domain knowledge, which is unlikely to be present at a single organization that has the technical background to support formalization of concepts (i.e. ontology development and maintenance). Further, if the experts providing the algorithms generally possess the domain knowledge, they do not have generally the knowledge of the underlying concept formalization. In addition, these experts usually do not have the knowledge needed to get access to the relevant data.

In addition, while interoperability standards may be available for some simpler data types corresponding to the outputs of common devices (e.g. simple sensors), it is likely that such standards will not exist for the new types of advanced services at the point of their introduction. For example, international interoperability standards will not exist at the point of the introduction of a new complex service, such as a specific diagnostic analysis of a device performance/status, system control, etc. Instead, standards will evolve within a specific environment (e.g. an Internet of Thing/smart homes network offered by a specific provider). Moreover, device providers need to make their devices compatible with the overall existing system.

There are currently no efficient solutions that allow environment operators to easily specify the standards and help the developers of devices and services to make their solutions compatible with the overall environment.

### Brief summary of the invention

In order to address these and other problems, there is provided a process integration method as defined in the appended independent claim 1 and a process integration system as defined in appended claim 12. Preferred embodiments are defined in the dependent claims.

The various embodiments of the invention thus allow rapid integration of new algorithms and devices into open-ended processing environments.

In particular, the integration method and system according to the various embodiments of the invention solves interoperability problems in an important class of contemporary processing environments by combining (i) fast definition of services associated with the outputs of algorithm, (ii) fast association of the internal variables with the existing types of data-objects used in the processing environment and (iii) software components which allow runtime integration of algorithms into workflows.

Further advantages of the present invention will become clear to the skilled person upon examination of the drawings and detailed description. It is intended that any additional advantages be incorporated herein.

### Brief description of the drawings

Embodiments of the present invention will now be described by way of example with reference to the accompanying drawings in which references denote similar elements, and in which:
FIGURE 1 schematically shows an exemplary architecture in which the process integration system can operate;
FIGURE 2 schematically shows exemplary process proxies, according to certain embodiments of the invention; and
FIGURE 3 schematically shows the structure of the proxy constructor system, according to certain embodiments of the invention; and
FIGURE 4 schematically represents the structure of a process proxy, according to certain embodiments of the invention; and
FIGURE 5 schematically represents a linker tool for linking the local algorithm variables and data-objects in the overall processing environment, according to certain embodiments of the invention.
FIGURE 6 shows a flowchart of the process integration method, according to certain embodiments of the present invention;

It is noted that the drawings of the invention are not necessarily to scale. The drawings are merely schematic representations, not intended to portray specific parameters of the invention. The drawings are intended to depict only typical embodiments of the invention, and therefore should not be considered as limiting the scope of the invention.

### Detailed description

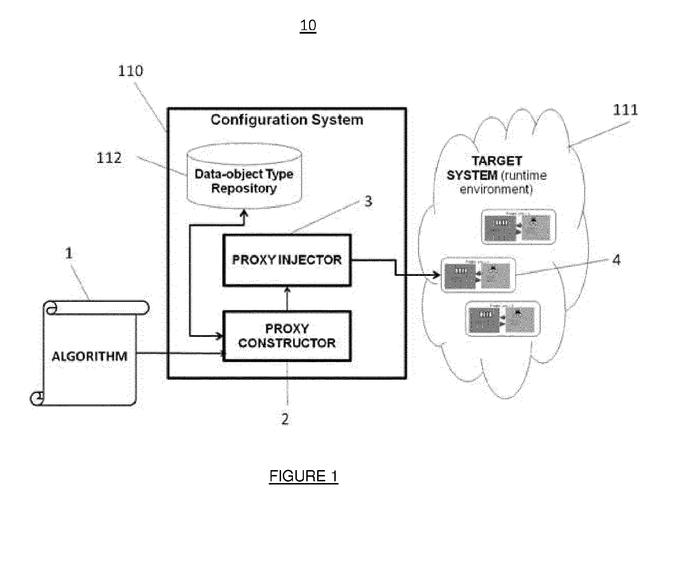

Referring to Figure 1, there is shown an overview of an exemplary architecture 10. The architecture comprises two main components :
(i) at least one information processing system 111 (also referred to thereinafter as "target system"), and
(ii) a system for integrating arbitrary algorithms 110 into the target systems 111 (also referred to thereinafter as "integration system"), according to certain embodiments of the invention.

The target systems 111 may be based on the process proxies. In such target systems, each process (i.e. algorithm) comprises a dedicated process proxy. A process proxy generally implements semantic interoperability, supports service discovery and creates and maintains information flows between compatible processes. More specifically, process proxies of different processes implement a processing environment in which compatible processes can interoperate. The following description will be made with reference to class of target systems 111 based on such process proxies.

Each algorithm in the target system 111 may be associated with input and output data objects defined in the target system 111. The process proxy 4 manages the communication, i.e. exchange of relevant data-objects, with other processes in the target system 111. The data-objects may be of arbitrary complexity, ranging from primitive data-types to complex data-structures bundling heterogeneous data-types. The target system 111 may maintain a description of:
(i) the input and output data-object types, and
(ii) their providers/consumers (i.e. specific process proxies).

While the invention is not limited to a specific proxy implementation, it is assumed thereinafter that a proxy comprises two distinctive functional parts, namely a communication and a processing component, which may communicate synchronously or asynchronously.

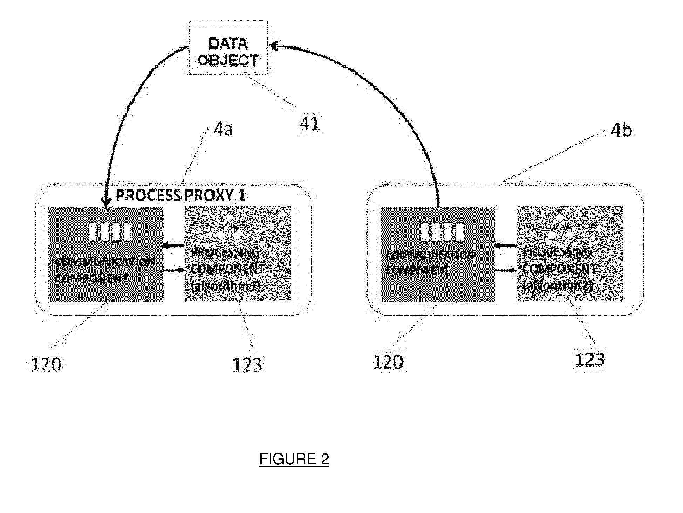

Figure 2 shows the basic elements of a proxy architecture. As shown, each proxy 4a or 4b comprises a communication component 120 which supports inter-proxy communication. The communication component 120 may further support service discovery and introduce negotiation capabilities. Communication components 120 may be configured to automatically establish workflows between processes/algorithms associated with different proxies by executing service discovery. Moreover, each proxy may comprise a processing component 123 which can encapsulate an arbitrary process implemented through an algorithm. The proxies 4a and 4b shown in figure 2 thus provide a uniform interface between different processes involved in a collaborative processing workflow.

The following description will be made with reference to the process proxies depicted in figure 2 for illustration purpose only.

In one embodiment of the invention, the process proxy can be a Dynamic process Integration Framework (DPIF) proxy. DPIF proxies, as described in Gregor Pavlin, Michiel Kamermans, Mihnea Scafes, "Dynamic Process Integration Framework: Toward Efficient Information Processing in Complex Distributed Systems", Informatica 34(4): 477-490 (2010), can be used to create fast advanced hybrid analysis systems.

A system of process proxies 4 may be created in a targeted system 111 and configured with the help of the integration system 110 to manage the access to data and interoperability between heterogeneous processes based on different types of algorithms. Examples of such applications may include for example Internet of things, Smart homes, or large scale crisis management applications.

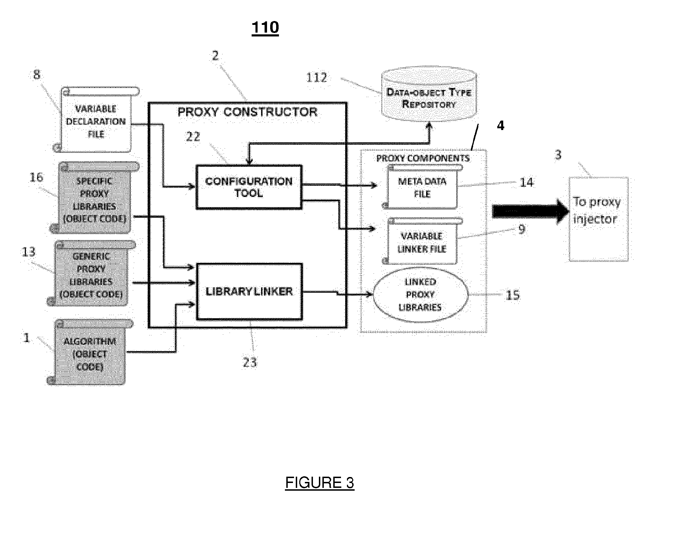

Figure 3 shows the general structure of an integration system 110 according to certain embodiments of the invention.

The integration system 110 may operate in an arbitrary environment. The integration system 110 allows integration of a given algorithm 1 (also referred to as an "input algorithm") into the target system 111. The input algorithm can be any type of code implementing a process related to a specific application. Input algorithms can roughly be classified into the following types:
(i) device drivers allowing access to specific hardware, such as sensors, computing components, etc.;
(ii) implementation of arbitrary mathematical functions;
(iii) inference based on Artificial Intelligence (also referred to thereinafter as "AI");
(iv) optimization/planning processes, (v) access to web-services, communication pipes and data-bases, and
(vi) human-machine interaction processes.

It should be noted that physical devices may be integrated via drivers, dedicated algorithms. Moreover, the input algorithm may be previously coded in an arbitrary programming language such as JAVA, C or C++, and compiled into software libraries..

Turning back to figure 1, the integration system 110 comprises a proxy constructor 2, a proxy injector 3 operating in the configuration environment 110, and a data-object type repository 112.

The proxy constructor 2 is configured to generate components which are required by the proxy injector 3 to create the dedicated process proxy 4 for the input algorithm 1 that is to be integrated in the target system 111. Proxy constructor 2 may produce linked software libraries comprised of the coded input algorithm 1, and software libraries implementing the generic functionality of the communication and processing components. Moreover, the proxy constructor may also support creation configuration files by using information contained in a data-object type repository 112 which describes the data object types in the target system 111 as detailed thereinafter. Upon injection, the linked software libraries may be used to create a new process proxy while the configuration files may be used by the newly created proxy to (i) publish its output data types and (ii) subscribe to the relevant types of data objects. In addition, the configuration file may also comprise the data used for the negotiation and other information over security and access aspects. This makes the wrapped data source or algorithm instantaneously visible and accessible. The configured process proxies enable sharing of relevant information between different processes. Accordingly, the suitable information can be delivered to the suitable process at the suitable moment in time.

Each process proxy 4 associated with an algorithm can be further configured to continuously listen to the information relevant for the algorithm and/or disseminate information (e.g. intelligence products) to the target recipients.

The target system 111 created by the process proxies 4 thus represents various data sources and algorithms.

Figure 3 illustrates the general structure of the proxy constructor 2, according to certain embodiments of the invention.

The proxy constructor 2 may use a configuration tool 22 to allow users (e.g. providers of devices and algorithms) to integrate their algorithms into the target system 111, without the need of any knowledge about specific programming techniques, languages or formal data models. From the description specified by the users through the user interface, the configuration tool 22 may generate the descriptions of the data-object types produced by the input algorithm 1 encoded in any arbitrary language and format (example is an ontology language such as OWL.

Moreover, by using the configuration tool 22, each user can describe relations between the output data-objects types and the required data object types. Such information can be used by process proxies 4 to integrate the expert/process into a workflow via service discovery. The configuration tool 22 may be for example based on the OntoWizard tool disclosed in the Ate Penders, Gregor Pavlin, Michiel Kamermans: "A Collaborative Approach to Construction of Large Scale Distributed Reasoning Systems", International Journal on Artificial Intelligence Tools 20(6): 1083-1106 (2011). Such OntoWizard tool enables the participants to align the semantics and the syntax of the data-objects types used by the algorithms in the target system 111.

Each output data-type may be previously described by the algorithm provider via the configuration tool 22. Such output data-type descriptions may be stored in the data-object type repository 112. The data-object type repository 112 is thus provided to collect descriptions of all types of data-objects that can be produced by the algorithms in the target system 111. This allows inspection of the available types of data-objects in the target system and specification of relations between the local input algorithm variables and data-object types in the target system 111.

The integration system 10 according to certain embodiments of the invention may be based on a representation of the relations between specific variables in the input algorithm 1 and the data object types supported by the target system 111. These relations may be encoded in a Variable-Linker file 9, which may be a text file in any format such as for example XML. The Variable-Linker file 9 may be used by the process proxy to connect the variables in the input algorithm 1 with arbitrary data sources or consumers in the target system 111.

By combining the integration system 110 with process proxies, the outputs of processes or the data sources can become visible in the overall target system 111, have a well-defined semantics, and be in the suitable format so that other components/processes can use it. Further, the process inputs connected to the suitable sources can provide data in the suitable format and with the correct meaning.

According to one embodiment of the invention, the processing component 123 of each process proxy 4 may implement specific mechanisms which are based on a combination of certain types of internal data structures, generic as well as special functions. All these elements may be coded, i.e. implemented by using an arbitrary programming language and compiled into binary code.

Accordingly, the mapping between semantically rich data representations can be achieved dynamically without the need for hardcoding of various data-dependent aspects, which would require capturing the relations between algorithm variables and data-objects from target system 111 directly in the program code.

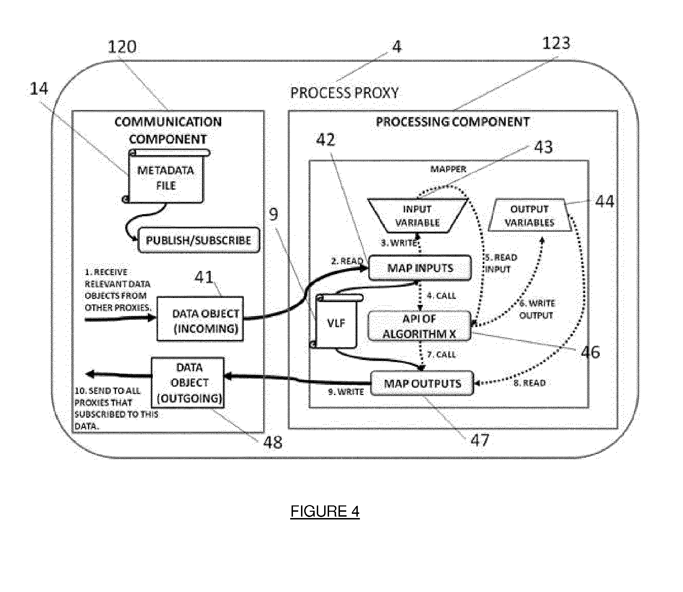

Figure 4 represents the main components of the processing component 123 as well as the relations between the components, according to certain embodiments of the invention.

As shown, the processing component 123 of each process proxy may comprise the following main components:
(i) an input function 42 for translating the incoming data-objects 41 into the corresponding internal data types used by the wrapped algorithm and invoking the algorithm if all the required inputs have been obtained.
(ii) An input data structure 43 for temporally storing the incoming internal data; the input data structure 43 may be static, and/or comprise class variables in object oriented languages;
(iii) an algorithm interfacing function 46 for implementing calls to a specific algorithm such as a feed algorithm with inputs obtained from the temporal global data structure, for reading the algorithm outputs, and for writing them to the output variables structure 44;
(iv) An output data structure 44, for temporally storing the outgoing internal data; the output data structure 44 may be static, and/or comprise class variables in object oriented languages;
(v) An output function 47 for reading from the output variables structure and translating the internal output variables to data-objects 48 that can be circulated in the target system 111.

In a preferred embodiment of the invention, the input and output functions 42 and 47 may be generic (i.e. identical code is used in all proxies). The two input/output functions 42 and 47 may be read by the VLF file 9 which provides the mapping in order to translate between internal variables used by the input algorithm and the data-objects 41 and 48.

The algorithm interfacing function 46 implements algorithm specific calls. The function interfacing 46 may be derived from a template (e.g. a sub-class in object oriented programming environments) and only a few custom lines of code may be added. The adapted function may then be compiled into a specific library 16 (as shown in figure 3). Accordingly, the algorithm 1 can be integrated with a proxy 4 with very few coding steps, while the majority of the code in each processing component 123 can be reused (i.e. identical in all proxies).

Figure 4 show a number of steps 1 to 10 that are implemented to feed inputs to a wrapped algorithm and to disseminate its outputs in the target system 111.

Such architecture of the processing component 123 of each process proxy 4 makes it possible to support implementation of interoperability standards resulting from the configuration process supported by Proxy Constructor 2.

Turning back to figure 3, the proxy constructor 2 comprises two main components: a configuration tool 22 and a library linker component 23.

The input algorithm 1 is initially coded in an arbitrary programming language (such as JAVA or C, C++, C#) and compiled, which provides software libraries associated with the algorithm 1. The linker component 23 is configured to link the compiled algorithm code (1) with:
- the generic proxy software libraries 13 implementing the communication component 120 and the generic parts of the processing component 123 (such as 42, 43, 45 and 46), and
- the libraries 16 comprising the specific algorithm interfacing function 54.

The set of linked libraries 1, 13 and 16 is used by the proxy injector 3 to create a running proxy in the target system 111.

The running proxy may then be configured such that it can subscribe to the suitable data-object types corresponding to the input internal variables and publish the outputs in terms of the suitable data-object types in the target system 111.

A proxy configuration method may be implemented by the proxy configuration tool 22 to prepare the process proxy configuration files.

Such Proxy configuration method may comprise the creation of a Variable Declaration File 8 (also referred to thereinafter as VDF), based on the coded algorithm 1, to describe the types and names of variables representing inputs and outputs of the algorithm 1. This can be done automatically or manually, by using a suitable format.

Independently of the configuration files generation method, each entry in the VDF 8 may comprise the following parameters :
- The name of the variable;
- The type of the variable (e.g. primitive types, such as real, integer, string, or composite types, such as structures, arrays, lists, etc.);
- The range of values (i.e. the domain), if applicable;
- A set of keywords which can be used for improved automated matching, if available; and
- A verbal description of the meaning of the variable.

The proxy configuration tool 22 facilitates the generation of the following configuration files associated with the algorithm 1, which may include:
- An algorithm Metadata file 14 describing the types of data-objects that the wrapped algorithm 1 provides to the target system 111 and the types of data-objects that the algorithm 1 requires as inputs. This file can be arbitrarily formatted, for example using XML (extensible Markup Langage) and OWL (Web Ontology Langage). The creation of the Metadata file 14 can be based on arbitrary tool, such as for example OntoWizard, which guides a user through a sequence of configuration steps resulting in a rigorous description of the relevant data-object types and their relations.
- A variable linker file 9 (VLF) for storing information about the associations between the internal input and output data (variables) of the algorithm 1 and the data-objects of the target information processing system 111.

The generation of the Variable Linker File 9 comprises linking local variables with data objects. More specifically, the VLF 9 may be created from the Variable Description File 8 (VDF).

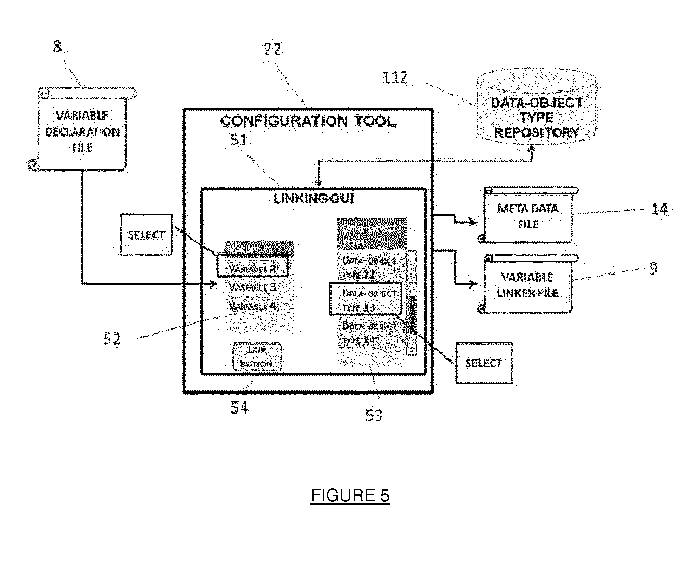

Figure 5 shows the main components of the configuration tool 22, according to certain embodiments of the invention.

To create the VLF 9, the configuration tool 22 may implement a special reader of VDF 8 and a graphical user interface (GUI) which displays the internal variables of algorithm 1 (i.e. variables declared in VDF 8) in the interface 51 of the configuration tool.

The interface 51 may comprise :
(i) suitable browsing tools to inspect the existing data-object types in the target system 111,
(ii) an editor to allow specification of a new data-object type if no adequate type exists in the targeted system 111, and
(iii) controls which allow the creation of a relation.

A first graphical element 52 may be used to represent the variables of the algorithm declared in VDF 8. The graphical element 52 may be any arbitrary graphical element, such as a drop down list, scroll list, etc. Moreover, a second graphical element 53, such as a scroll list, may be used to represent the list of data-object types from the data-object type repository 112. For each displayed internal variable, the user may either
- find a matching existing data-object type stored in the Data-Object Type Repository 112 and displayed in 53, or
- define a new data-object type using an appropriate tool, such as for example the OntoWizard tool.

For each selected internal variable, the user may use the browser tool 53 to scroll to the adequate description of a corresponding data-object type and uses any suitable control to select the data-object type, such as for example a select button or double click in the browser. Variables may be linked by selecting a variable in 52 and the corresponding data-object type in 63 and by activating a suitable control element, such as for example a button 64 or double click on the right element in 53.

After all internal variables used by algorithm 1 are associated with the corresponding data-object types in the target system 111, the configuration tool 22 is configured to automatically generate a VLF 9 describing the relations. The VLF 9 may be described in any arbitrary format supported by the process proxy components, typically the functions 42 and 47.

Turning back to figure 3 and 4, the proxy injector 3 may use the linked libraries 15 to start the corresponding proxy in the target system 111 and VLF 9. Figure 4 specifically depicts the usage of the configuration files. The metadata file 14 may be used by the communication component 120 to subscribe to relevant data-object types in the target system 111 and to publish the data object type corresponding to the algorithm 1 output.

Each time a new process based on the same algorithm 1 is created, the same software libraries 15, the VLF 9 and Metadata OWL file 14 can be reused to spawn a new process proxy in the target system 111.

Accordingly, the system 10 according to the various embodiments of the invention further allows rapid integration of arbitrarily complex analysis processes, devices (e.g. sensors, smart appliances) and databases.

The integration system may be used as a basis for the development stacks which will be a significant enabler of improved exploitation of the data sources and advanced algorithms in open ended systems, where new data sources are being added at a rapid pace and increasingly complex processes have to be controlled.

The integration system according to the embodiments of the invention makes it possible to easily populate open ended environments with very heterogeneous devices and processes and to quickly couple devices and processes, thereby harnessing the full potential of the advanced hardware and algorithms.

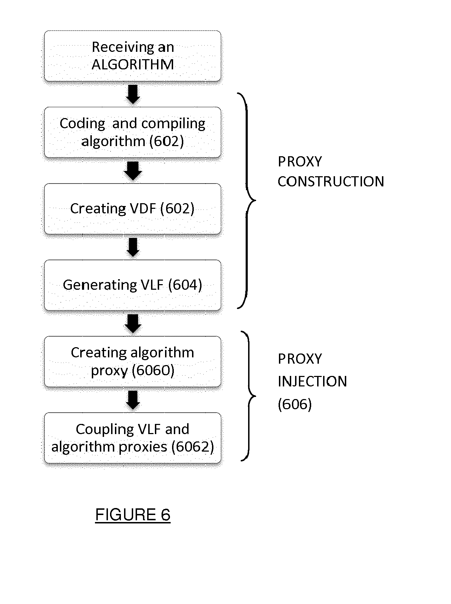

Figure 6 is a flowchart of the process integration method for integrating an arbitrary algorithm 1 in an existing target system 111, according to certain embodiments of the invention.

In step 600, the algorithm coded in a selected language previously prepared by the designer of a given process is received. To prepare the algorithm, the designer of the process may code the algorithm using a suitable language, preferably an object programming language such as Java or an equivalent programming language, but is not limited to this. The designer may then compile the code into software libraries. As will be readily understood by the skilled person, the algorithms thus prepared form the basis for the integration of data sources and analysis capabilities. In particular, the input algorithm 1 may be provided, for example, to read outputs from the sensor device driver software, query databases or support arbitrarily complex system control, state estimation, learning, etc.

In step 602, the Variable Declaration File (VDF) 8 is created. The Variable Declaration File 8 represents a file having a predefined format that describes the types of arguments and the outputs of the compiled algorithm from step 600. The file 8 may be encoded in any suitable format such as in XML. According to one aspect of the invention, the VDF file 8 may be configured to capture the variable names and the variable types. The VDF file 8 may be used to generate a display of a special view on the Graphical User Interface (GUI) 51 in which the user (e.g. the developer) can associate the variables from the algorithm with existing types of data/information in the overall processing environment based on algorithm proxies, thereby creating an entry for each input and output variable in the algorithm (as represented in figure 5).

Moreover, in step 602 the libraries implementing the communication component 120 and processing component 123 are linked. In particular, the generic proxy libraries are linked with the algorithm library and a specific proxy library which implements calls to the algorithm library.

In step 604, the Variable Linker File (VLF) 9 is then created. In this step, the algorithm inputs and outputs are associated with information types (i.e. data-object types) used in the overall processing environment (i.e. target system 111). The Variable Declaration File 8 resulting from step 602 may be used to generate a view of the variables declared in VDF 8 in an appropriate Graphical User Interface of the configuration tool 22.

The user (for example Software designer) may then be prompted by the configuration tool 22 to associate the variables listed in the configuration file 8 with the data-object types that exist in the target information processing system 111. The data-object types can be associated with arbitrarily complex representations and rich semantics. For example, a data-object type can be represented by a complex structure whose elements have different semantics.

To allow the user to connect the variables listed in VDF 8 to the data-object types maintained in the target system 111, a special user interface in the configuration tool 22 may be used. This results in :
- a Metadata file 14 describing the inputs and outputs in terms of the data-object types maintained in the target system 111, and
- a Variable Linker File (VLF) 9.

In step 606, the process is injected in the runtime environment 111. In this step, a new interface view may be generated for the finalization of the integration of the algorithm. More specifically, in response to the selection of a finalization button by the user, the following steps may be performed :
- In step 6060, the linked libraries 15 may be used to generate a process proxy 4 in the target system 111 using for example a bootstrapping mechanism;
- In step 6062, the Variable Linker File 9 capturing associations between the variables in the algorithm and the data-object types in the overall system 111 (step 604) may be coupled with the created process proxy based on the linked mapper libraries 15. The VLF 9 is processed by the Proxy's processing component 123 to translate between the data-object used in the overall system 111 and the local variables of the algorithm 1. The data-objects can be transported between the proxies 4 in a format following the standards of the overall target system 111. The processing component 123 of the process proxy 4 will use the mapping between the data-objects and the local variables of the algorithm specified in the VLF 9 when receiving data (the way the VLF 9 is used by the proxy 4 in the runtime environment is illustrated in figure 4).

Accordingly, the mapping between the algorithm and the data types in the existing processing system 111 can be achieved by combining :
- linked proxy libraries 15, and
- the variable linker file 9 (VLF) which associates the variables in the algorithm with the data-object types used in the overall system.

The described embodiments of the invention thus provide a process integration method for systems where each device or algorithm is represented by a process proxy. The process proxies 4 support service discovery and creation of workflows between data producers and consumers at runtime. The workflow formation is based on local domain knowledge/models of each process proxy; i.e. no centralized service composition is required, but not excluded. The process integration method solves interoperability challenges in environments consisting of very heterogeneous types of services. In particular, it supports efficient description of new services and discovery/inspection of existing compatible services. This allows definition of new services and their standardization in open ended environments. The approach is based on principles that explicitly take into account the properties of organizations.

The process integration system according to the various embodiments of the invention can be applied in a wide class of domains, such as Internet of things, Smart cities, Smart homes, Large scale crisis management, advanced solutions to surveillance in defense and civilian domains, security, etc.

Such domains are characterized through large quantities of very heterogeneous data stemming from different, usually spatially dispersed devices. Such rich body of data can be exploited for improved assessment and prediction of the states of the world/relevant processes in the domain of interest. In this way better informed decisions can be likely leading to a better use of resources (e.g. reduced energy consumption, better protection of citizens and countries, etc.) and more effective mitigation of negative effects (e.g. less pollution, less damage, etc.).

Even if not limited to such environments, the invention has particular advantages in open ended environments, where the integration system can allow a dynamic integration of new types of services at a fast pace, such as for example sensors of different types, smart appliances providing complex diagnosis services, energy consumption monitoring services based on arbitrarily complex algorithms, etc.

The integration system according to the various embodiments of the invention additionally allows for efficient creation of device interfaces that are compatible with a specific, quickly evolving environment.

The integration system 10 according to the described embodiments of the invention may be used for example for integrating smart home control solutions in an existing processing system. The control solutions can be based on various algorithmic approaches, such as for example:
(i) rule-based systems that drive the air conditioning units, depending on the presence of people in different rooms,
(ii) systems that learn typical behavior of inhabitants to optimize the energy consumption and many more.

In such example, the process integration method according to the embodiments of the invention can be used for :
(i) integrating a control algorithm in the existing system;
(ii) Making new devices compatible with the internal standards of a specific Internet of Thing environment.

In scenario (ii), the integration method according to the embodiments of the invention can be used to create libraries and metadata that allows instantaneous integration of a specific type of device, without any coding at the time of the installation.

Another exemplary application of the invention may be the fast integration of a process or an algorithm in an existing processing system, for instance for the installation of a new smart algorithm by a developer to :
- reduce energy consumption using different devices, such as motion detectors, thermometers, individual air conditioning units/subsystems in different rooms (living room, bedroom, kitchen);
- control the intensity of the air conditioning operation in each room.

The inputs to the new control algorithm may be, in this example, data from the motion sensors and preferences by the users. To be integrated to the overall Internet Of Things environment, the input and output parameters of such motion sensors are to be connected with adequate data sources and consumers.

To install a new control system, the developer may need to plug the controller into the smart home environment on the fly, for example by:
(i) connecting the control system to the motion sensors and the air conditioning devices in 10 minutes,
(ii) configuring the operational preferences, and
(iii) providing a 5 minute training on how to use the web-based/app-based system configuration to the home owners.

The process integration system 10 according to the embodiments of the invention may be used as follows:
- The developer can use a template class to implement the algorithm. The specific class is compiled and a Variable Declaration File (VDF) 8 is created. This can be done automatically, by parsing the method/function source code;
- The developer can open the configuration tool 22 and use it to import the proprietary libraries containing the generic control algorithm and the VDF 8;
- The configuration tool 22 can be used for fast inspection of the available sensors and devices (including air conditioning systems) in the existing environment. The inspection view allows the developer to understand the semantics (i.e. the meaning) and formats of the available data;
- A special graphical interface generated by the process integration system allows the developer to associate the inputs of the algorithm with the available sensors and devices in the overall loT system. It should be noted that no programming is required. The VDF 8 is used by the configuration tool 22 to open a special view in which each declared variable in VDF can be associated with a specific type of data sources. This provides a specific variable linker file for this algorithm;
- Another graphical interface generated by the process integration system may be used by the developer to specify individual operational parameters, such as required temperatures in different rooms, timing to switch between day and night mode, alarm thresholds, etc;
- The control algorithm libraries are then imported by the process integration system 10, the inputs of the algorithm are linked up with sensors and the output of the algorithm is linked with the air conditioning units;
- a fast activation of the control application interface that the users can run on their personal devices such as mobile phones or home computers is then performed; the application allows the user to change various parameters of the climate control system at any point in time;
- The system is finally set and started.

It should be noted that this installation could alternatively take place remotely.

During the life cycle of the smart home system, improved smarter control solutions can be offered to the end-user, such as a solution which learns the typical behavior of the inhabitants to further reduce the energy consumption. With the process integration system, the new control algorithms can be plugged into the overall smart home environment fastly (e.g. in 5 minutes) either remotely or via a service person sent to the home.

Yet another exemplary application of the process integration system according to the embodiments of the invention can be the fast integration of a device. For example, the operator of an Internet of Things environment can provide a device provider with a development tool based on the process integration system to allow fast design of interfaces that make the devices compatible with the Internet of Things (IoT) environment. The development tool can access to a specific repository defining the existing data types in the loT environment (i.e. Data-object type Repository 112). The development tool can be used to make outputs of a certain device type, such as a sensor, compatible with a specific environment by executing the following steps:
- The proxy library provides a code template that is used to derive a specific device sensor reading software library linked into the libraries 15. The specific method is implemented typically by adding a few sensor specific calls for the device driver (e.g. reading sensor values, callback functions, etc.) in the method of the template class. The code is compiled into a library and the corresponding VLD 8 is prepared.
- The configuration tool 22 may then import the configuration/declaration file 8; the output and input (i.e. device control) variables may be shown in a special view. The configuration tool 22 allows fast inspection of the types of data available in the loT environment. The inspection view allows the engineer to understand the semantics (i.e. the meaning) and formats of the data already provided in the environment.

- If the device outputs specified in the configuration/declaration file correspond to existing data types, then the developer may use a special editor to associate the inputs and outputs of the device driver with the available sensor types. It should be noted that no programming is required; the algorithm linking with the smart network is carried dynamically.
- If the data type provided by the device class is not available, the configuration tool can generate a graphical interface view that allows definition of a new data type, and that will be associated with the device service.
- After these steps, the variable linker file 9 and the Metadata file 14 (for example in OWL) are created by the process integration system; these files can be for example stored on the firmware of the device, placed on an installation CD or be provided via internet.
- When a new sensor of this type is installed in the specific loT environment, the specific software library will be linked with the generic proxy libraries 13, and a new process proxy 4 will be created in the loT environment. The Metadata file 14 and the variable linker file 9 associated with this type of devices can then be uploaded (for example, from the firmware, CD or dedicated Internet site). The configuration tool 22 can be activated to facilitate specification of some operational parameters, such as the location of the sensor, specific activation conditions, etc., if needed.

It should be noted that a similar approach can be used by developers of algorithms which are likely to be used in large numbers of processes (i.e. many processes using this algorithm will be created) to prepare such metadata and specific libraries prior to the integration. Each time a new process based on the same algorithm is created, the same software libraries 13, VLF 9 and Metadata OWL 14 files can be used to spawn a new proxy, such as a process proxy.

The process proxy 4 in combination with the Metadata file 14 and the variable linker file 9 thus represent a sort of a "high-level device driver", which makes the device services available in a specific operational environment with specific description/definition of data sources and processing capabilities.

The skilled person will readily understood that the invention is not limited to Internet Of Thing applications and can apply to a wide range of fields, for example in defense and security fields where a large numbers of heterogeneous sensors and processing capabilities are to be integrated into coherent decision support systems or in large scale crisis management fields.

The process integration system according to the embodiments of the invention can thus allow developers of devices and algorithms to make their products compatible with the overall integration environment.

The described embodiments of invention more generally enable rapid integration of arbitrary processes into rich data environments. In particular, the invention allows providers of arbitrary algorithms and data sources (e.g. devices and databases) to dynamically embed arbitrary processing and data acquisition capabilities into information flows. Further, the integration process system according to the described embodiments of the invention allow for a fast and efficient description of the outputs of algorithms, devices and databases, such that they can easily be combined with other components in the overall distributed processing framework. Moreover, the integration process system allows an easy creation of information flows that feed the algorithms with suitable data, at low costs. It is adapted to a wide range of applications, such as Internet applications (Smart cities, Smart homes, Large scale crisis management, advanced solutions to surveillance in defense and civilian domains and security, etc.).

Although the embodiments of the present invention have been described in detail, it should be understood that various changes and substitutions can be made therein without departing from spirit and scope of the inventions as defined by the appended claims. Variations described for the present invention can be realized in any combination desirable for each particular application. Thus particular limitations, and/or embodiment enhancements described herein, which may have particular advantages to a particular application need not be used for all applications. Also, not all limitations need be implemented in methods, systems and/or apparatus including one or more concepts of the present invention.

Embodiments of the present invention can take the form of an embodiment containing both software and/or hardware elements.

In one embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

## Claims

1. A method for integrating a given algorithm (1) into a target information processing system (111), said algorithm being coded in a programming language and compiled into algorithm software libraries, said target information processing system (111) comprising a set of target system algorithms, each being associated with a process proxy, with algorithm variables and with variable data-object types, wherein the method comprises :
a. generating a Variable Linker File (9) for capturing the associations between the variables of said given algorithm and the data-object of said target information processing system (111),
b. linking the software libraries (1,16) associated with said given algorithm with predefined process proxy libraries (13), which provides linked libraries,
c. creating a process proxy (4) on a server based on said linked libraries (15) and said variable linker file; and
d. linking said Variable Linker File (9) with said process proxy (4), said process proxy (4) being configured to exchange data in the runtime environment of the target system environment using said Variable Linker File to translate between the data-objects in said target information processing system (111) and the variables of said given algorithm.

2. The method of claim 1, wherein said step of generating a variable linker file (9) previously comprises creating a Variable Declaration File (8) describing the types and names of variables representing variables of said given algorithm.

3. The method of claim 2, wherein the variable declaration file comprises an entry associated with each input and output data of said given algorithm, each entry comprising the name and the type of the input or output data.

4. The method of claim 3, wherein each entry associated with an input or output data of said given algorithm further comprises at least one among the following parameters:
- a range of values for the variables, and/or
- a set of keywords corresponding to the variables, and/or
- a verbal description of the meaning of the variables.

5. The method of any preceding claim 3 and 4, wherein the variable declaration file (8) is encoded in XML.

6. The method of any preceding claim 2 to 5, wherein said step of generating a variable linker file (9) comprises using a discovery mechanism based on the variable declaration file (8) and the information maintained in the target information processing system (111).

7. The method of any preceding claim, wherein the algorithm variables are linked with the data-object types using a linker interface (51).

8. The method of any preceding claim, wherein said process proxy (4) is created by using a bootstrapping mechanism.

9. The method of any preceding claim, wherein, in response to the reception of a piece of data by the process proxy (4) in the runtime environment, it further comprises using the variable linker file (9) to translate the data between the data types of target information processing system (111) and the variable types of the algorithm.

10. The method of any preceding claim, wherein in response to the creation of a new process or device based on said algorithm, it comprises using said variable linker file (9) and said linked libraries (15) for generating a new process proxy (4) in the runtime environment.

11. The method of any preceding claim, wherein the programming language is one of the following programming languages : JAVA, C++, C, and C#.

12. A system for integrating a given algorithm into a target information processing system (111), said algorithm being coded in a programming language and compiled into algorithm software libraries, said target information processing system (111) comprising a set of target system algorithms, each being associated with an process proxy, with algorithm variables, and variable data types, the system comprising a proxy constructor (2) including :
- a configuration tool (20) for generating a Variable Linker File (9) capturing the associations between the variables of said given algorithm and the data types of said target information processing system,
- a library linker (23) for linking the software libraries associated with said given algorithm with predefined process proxy libraries, which provides linked libraries,
the process integration system further comprising a proxy injector for :
- creating an process proxy on a server based on said linked libraries and said variable linker file; and
- linking said Variable Linker File (9) with said process proxy,
said process proxy being arranged to exchange data in the runtime environment of the target system environment using said Variable Linker File to translate between the data types in said target information processing system (111) and the input and output data of said given algorithm.

13. The system of claim 12, wherein the configuration tool (22) is configured to create a Variable Declaration File (8) describing the types and names of variables representing inputs and outputs of said algorithm, said variable declaration file (8) being used to generate the variable linker file.

14. The system of claim 13, wherein the variable declaration file (8) comprises an entry associated with each variable of said given algorithm, each entry comprising the name and the type of the variable.

15. The system of any preceding claim 12 to 14, wherein the proxy constructor comprises a discovery mechanism connected to the information maintained in the target information processing system (111) for generating the variable linker file (9) based on the variable declaration file (8) and the algorithm software libraries.
